# EUROPEAN PATENT APPLICATION

(11) **EP 4 759 726 A1**
(43) Date of publication of application: **17.06.2026**
(21) Application number: 25217465.1
(22) Date of filing: 20.11.2025
(51) Int. Cl.: B64G 1/64

(54) **SYSTEMS, DEVICES, AND METHODS FOR SPACECRAFT CONNECTIONS**

(30) Priority: 13.12.2024 US 202463733774 P
(71) Applicant: MacDonald, Dettwiler and Associates Corporation, Ste-Anne-de-Bellevue, QC H9X 3R2 (CA)
(72) Inventor: DAME, Sébastien, Quebec, H9X 3R2 (CA); SUTHERTOWN, Emily Mackay, Quebec, H9X 3R2 (CA)
(74) Representative: Mewburn Ellis LLP

(57) **Abstract**

Provided is a system, method and device for spacecraft connections. The system includes a first spacecraft including a structural connector that provides structural support and alignment to a second structural connector and an electrical connector that electrically connects the spacecraft platform to a launch vehicle and/or a second spacecraft. The electrical connector includes a first connector pad that mates with a second connector pad. The electrical connector is absent a connection force inherent in the electrical connector, wherein the connection force is a force that keeps the first connector pad in contact with the second connector pad.

## Description

### Technical Field

The following relates generally to spacecraft connections, and more particularly to connector systems and methods for spacecrafts.

### Introduction

Leadup to a space launch event can be long, from, for example, 30 to 60 days, and so spacecrafts that do not have an electrical connector may end up oversizing their onboard battery to account for fade that happens in this period of time before launch. This oversizing can represent, for example 5% to 10% of the battery capacity. Battery discharge can only go down to a certain depth of discharge safely to keep the voltage above a certain minimal threshold after which recovering the spacecraft is not guaranteed.

In conventional systems, spacecraft have umbilical connections between the launch vehicle (or dispenser) and the spacecraft. Those umbilical connectors have a spring to offset the retaining force and help with the separation. This spring force can cause an imbalance if not centered along an axis that points towards the center of gravity. This force contributes to create tip-off rates. For a stacked spacecraft launch, the tip-off rates may cause collisions between each spacecraft as they disperse.

Accordingly, there is a need for an improved spacecraft connections that overcomes at least some of the disadvantages of existing systems and methods.

### Summary

Provided is a connector system for spacecrafts. The system includes a first spacecraft including a structural connector that provides structural support and alignment to a second structural connector and an electrical connector that electrically connects the spacecraft platform to a launch vehicle and/or a second spacecraft. The electrical connector includes a first connector pad that mates with a second connector pad. The electrical connector is absent a connection force inherent in the electrical connector, wherein the connection force is a force that keeps the first connector pad in contact with the second connector pad.

The electrical connector may include a pogo connector. The first and second connector pads may be interfaces of the pogo connector.

The first connector pad may include an electrical contact surface. The second connector pad may include an electrical contact pin. The electrical contact pin may have a spring that flexibly contacts the electrical contact surface.

The first connector pad and the second connector pad may be located adjacent the structural connector.

The first connector pad and the second connector pad may not have alignment features. The structural alignment may be provided by the structural connectors and not the interface between the first connector pad and the second connector pad.

The electrical connector may include any one or more electrical connections.

The electrical connector may include a data connector that transmits data.

The data connector may connect to an onboard computer or a ground system computer.

The data connector may be a Controller Area Network (CAN) bus connector.

The data connector may be a point-to-point connector.

The electrical connector may include a power connector that transmits power.

The power connector may connect to an electrical power system that connects to an electrical battery on the first spacecraft.

The electrical connector may include a separation connector that detects if the first and second connector pads have been disconnected.

The separation connector may include a loop back connection that passes through the launch vehicle and/or the second spacecraft, and back up to detect when the first spacecraft is electrically connected.

The electrical connector may enable any one or more of monitoring battery temperature and voltage, trickle charging the battery before launch, detecting separation and initiating boot-up, and re-configuring spacecraft parameters through command and telemetry link.

The electrical connector may enable top-up a battery charge to minimize an amount of battery discharge before launch.

The pogo connector my have a first side and a second side, wherein the first side includes an electrical connector having an array of surface contacts, and wherein the second side includes an electrical connector having an array of pogo contacts.

The pogo contact may include a base and a pin, wherein the pin moves with respect to the base while maintaining electrical connectivity, wherein the pogo contact includes a spring that biases the pin away from the base, and wherein when the pin contacts an electrical surface contact the pin compresses the spring while maintaining electrical connectivity.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 illustrates a spacecraft launch system, in accordance with an embodiment.
Figures 2A and 2B illustrate top and bottom views, respectively, a spacecraft platform, in accordance with an embodiment.
Figures 3 and 4 illustrate a connector system, in accordance with an embodiment.
Figure 5 illustrates a pogo connector, in accordance with an embodiment.
Figure 6 illustrates a pogo connector pin, in accordance with an embodiment.
Figure 7 illustrates a spring connector, in accordance with an embodiment.
Figure 8 illustrates a conventional connector.
Figure 9 illustrates a point to point connector system, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

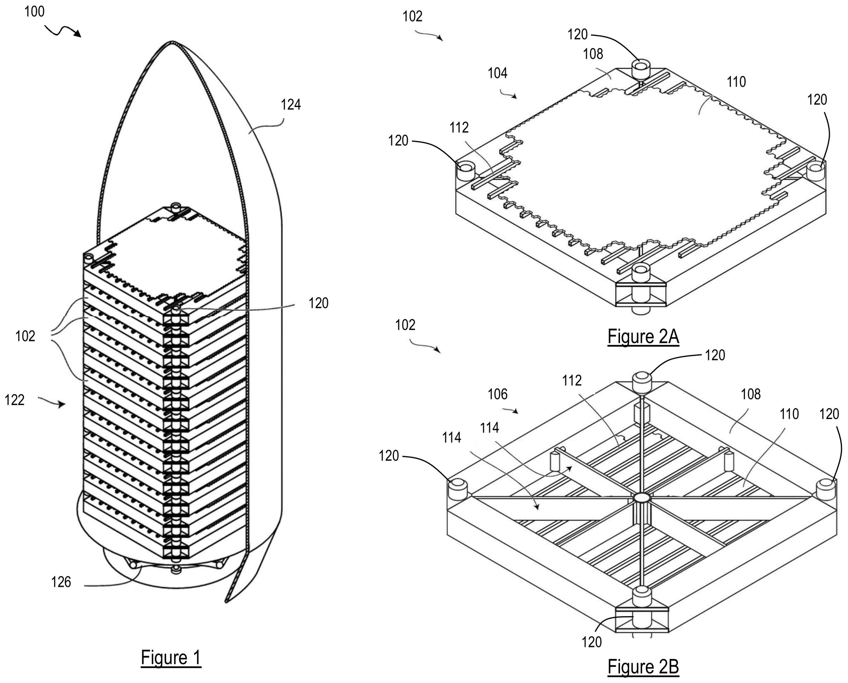

Referring to Figure 1, illustrated therein is a spacecraft system 100, in accordance with an embodiment.

The spacecraft platform system is described in United States Patent Application No. 63/678,832, which is hereby incorporated by reference in its entirety.

The system 100 includes a plurality of spacecraft platform 102. The spacecraft platform 102 may be stackable, mass- and volume-optimized, high-performance platform. The spacecraft platform 102 may have a compact design, which minimizes its stowed launch volume.

Referring now to Figures 2A and 2B, shown therein are top and bottom perspective views, respectively, of the spacecraft platform 102, according to an embodiment. Figure 2A illustrates a nadir side 104 of the spacecraft platform 102. Figure 2B illustrates a back side 106 of the spacecraft platform 102.

The spacecraft platform 102 includes a primary support structure 108 for supporting an antenna 110. The antenna 110 may be-a direct radiating array (DRA) 110. The antenna 110 may be a synthetic aperture radar (SAR) antennas.

The spacecraft platform 102 includes a plurality of DRA support beams 112 interposed between the primary support structure 108 and the antenna 110. The spacecraft platform 102 includes a plurality of secondary support structures 114 which support the support beams 112, which support the antenna 110.

The spacecraft platform 102 includes a plurality of structural connectors 120. The structural connectors 120 may be cup cones. The structural connectors 120 provide structural support and alignment between each of the spacecraft platforms 102 in a stacked configuration 122. The structural connectors 120 transmit mechanical and/or physical loads.

Referring again to Figure 1, the system 100 includes a launch vehicle 124 storing a plurality of the spacecraft platforms 102 in the stacked configuration 122. The launch vehicle 124 has an outer shell suitable to protect the spacecraft platforms 102 stored therein. For the purposes of clarity in Figure 1, the outer shell is shown as only partially complete, but it will be appreciated that, in actuality, the outer shell is complete.

The system 100 includes a launch vehicle adapter 126 for providing for structural attachment of the spacecraft platforms 102. The launch vehicle adapter 126 is further attached to the launch vehicle.

In the stacked configuration 122, the structural connectors 120 are mutually connected to support the mechanical or physical loads from each spacecraft platforms 102. The structural connectors 120 connect the spacecraft platforms 102 to the launch vehicle adapter 126 (either directly, for a particular spacecraft platform 102 immediately adjacent the launch vehicle adapter 126, or indirectly, via the spacecraft platforms 102 in between the particular spacecraft platform 102 and the launch vehicle adapter 126). After deployment of the launch vehicle and once the spacecraft platforms 102 are in orbit, the structural connectors 120 facilitate separation of each spacecraft platform 102 from the other spacecraft platforms 102. The structural connectors 120 may include a support hold-down mechanism (not shown).

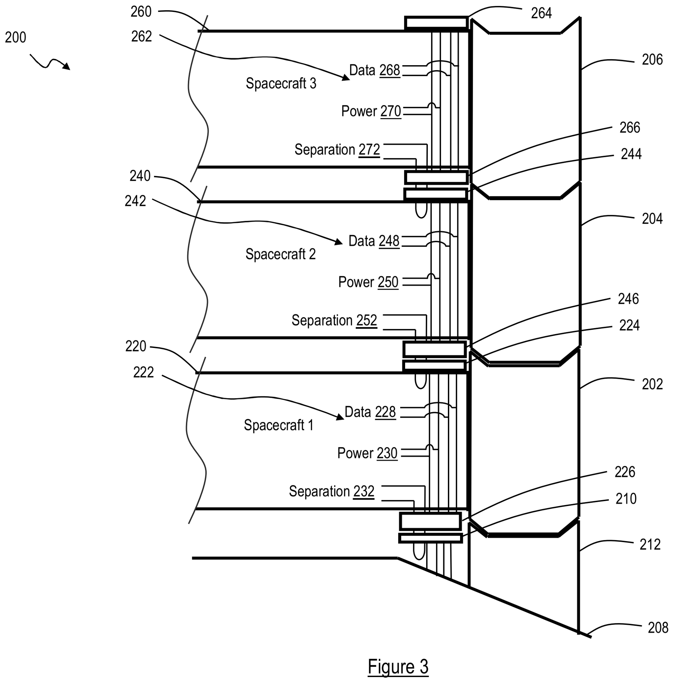

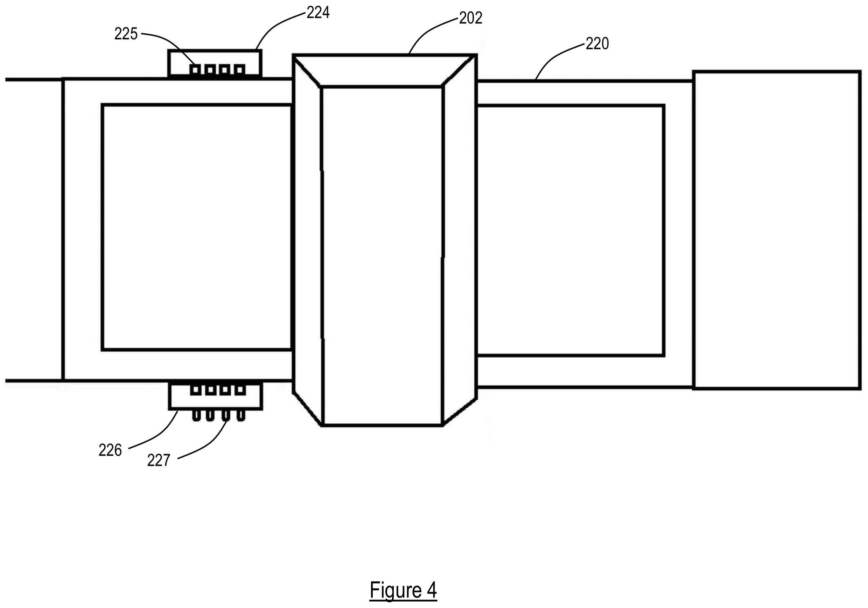

Referring now to Figures 3 and 4, illustrated therein is a connector system 200, in accordance with an embodiment. The connector system 200 may be used with the launch vehicle 124 and the spacecraft platforms 102 of Figures 1, 2A, and 2B. The connector system 200 may be use with other spacecraft 102 and launch systems.

The connector system 200 includes a plurality of spacecraft 220, 240, 260. The spacecraft may be the spacecraft platforms of Figure 1. The plurality of spacecraft includes a first spacecraft 220, a second spacecraft 240, and a third spacecraft 260. While three spacecraft 220, 240, 260 are shown in Figure 3, there can be one or more spacecraft in the system 200. Figure 4 shows a schematic view of the first spacecraft 220.

The connector system 200 includes a plurality of structural connectors 202, 204, 206 that structurally connect the spacecraft 220, 240, 260. The structural connectors 202, 204, 206 may be the structural connectors 120 of Figure 1.

The connector system 200 includes a plurality of electrical connectors 222, 242, 262 that electrically connect the spacecraft 220, 240, 260. While the electrical connectors, 222, 242, 262 are located in the spacecraft 220, 240, 260, the electrical connectors 222, 242, 262 may be located in the structural connectors 202, 204, 206.

The electrical connectors 222, 242, 262 include a first connector pad 224, 244, 264 that mates with a second connector pad 226, 246, 266. The electrical connectors 222, 242, 262 are absent a connection force inherent in the electrical connector 222, 242, 262. The connection force is a force within conventional connectors that keeps the first connector pad 224, 244, 264 in contact with the second connector pad 226, 246, 266.

The first connector pad 224 of the first spacecraft 220 electrically connects with the second connector pad 246 of the second spacecraft 240. The first connector pad 244 of the second spacecraft 240 electrically connects with the second connector pad 266 of the third spacecraft 260.

The electrical connectors 222, 242, 262 may include pogo connectors, where the first and second connector pads are interfaces of the pogo connector.

The first connector pads 224, 244, 264 may include an electrical contact surface (see, for example, 225 Figure 4). The second connector pads 226, 246, 266 may include an electrical contact pin (see, for example, 227 Figure 4). The electrical contact pin may have a spring. The spring may flexibly contact the electrical contact surface, particularly where there is not perfect structural alignment between the spacecraft 220, 240, 260.

The first connector pads 224, 244, 264 and the second connector pads 226, 246, 266 may not have to be push apart, thereby reducing any unnecessary separation forces that may cause undesirable movement in a space environment.

The first connector pads 224, 244, 264 and the second connector pads 226, 246, 266 may be located adjacent the structural connectors 202, 204, 206.

The first connector pads 224, 244, 264 and the second connector pads 226, 246, 266 may have no alignment features that provide alignment between the spacecraft 220, 240, 260. The structural alignment between the spacecraft 220, 240, 260 is provided by the structural connectors 202, 204, 206 and not the interface between the first connector pads 224, 244, 264 and the second connector pads 226, 246, 266.

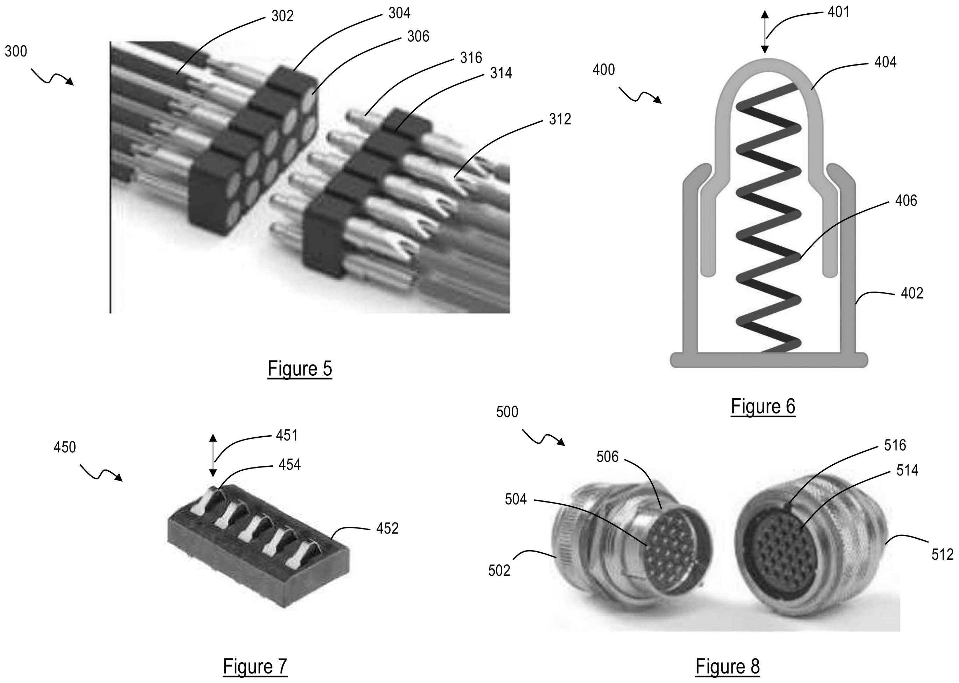

During separation of the spacecraft 220, 240, 260, the electrical connectors 222, 242, 262 may advantageously not be damaged because of forces that are otherwise present in conventional connection mechanisms (see, for example, Figure 7).

The electrical connectors 222, 242, 262 may include any one or more electrical connections. In the embodiment of Figure 3, six connectors are shown. The electrical connectors 222, 242, 262 may include one electrical connector with a return connection passing through the launch vehicle. The electrical connectors 222, 242, 262 may include fifteen to twenty or more electrical connectors.

The electrical connectors 222, 242, 262 include a data connector 228, 248, 268 that transmits data. The data connectors 228, 248, 268 may connect to an onboard computer or a ground system computer at a launch location. The data connectors 228, 248, 268 may be used to reconfigure parameters on the satellite prior to launch. The data connectors 228, 248, 268 may be used to monitor any one or more of critical telemetry, temperatures, and voltages.

The data connectors 228, 248, 268 may be a CAN bus system. The CAN bus system may include a set of common wiring that can connect multiple electrical components (sensors, computer processors, etc.).

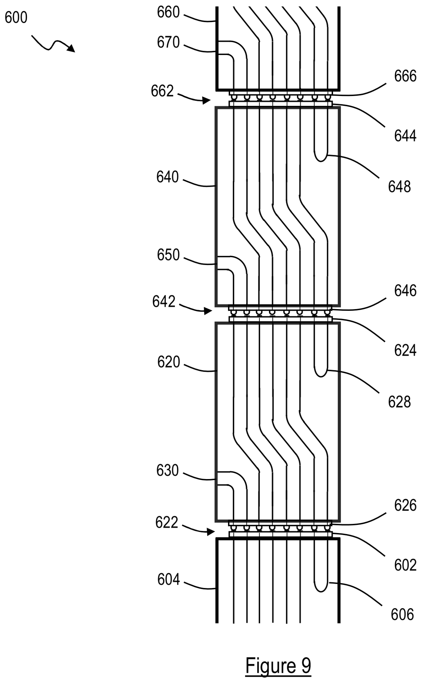

In an alternative embodiment, data connectors 228, 248, 268 include a point to point connection (see, e.g., Figure 9).

The electrical connectors 222, 242, 262 include a power connector 230, 250, 270 that transmits power. The power connector 230, 250, 270 may connect to an electrical power system. The electrical power system may connect to an electrical battery on the spacecraft 220, 240, 260. The power connector 230, 250, 270 may be used to charge or discharge the spacecraft battery.

The electrical connectors 222, 242, 262 include a separation connector 232, 252, 272 that detect if the first and second connector pads have been disconnected. The separation connector 232, 252, 272 include a loop back connection that passes through the adjacent spacecraft 222, 242, and back up to detect when the spacecraft is electrically connected and stacked. The separation connectors 232, 252, 272 may be connected to a battery charge regulator that regulates the charge of the battery. The separation connectors 232, 252, 272 may also be connected to the onboard computer.

The connector system 200 includes a launch vehicle 208. The launch vehicle 208 may include a spacecraft dispenser for dispensing the spacecraft. The spacecraft dispenser may keep the spacecrafts together. The launch vehicle 208 includes a electrical connector 210 that interfaces and electrically connects with the electrical connector 226 of the first spacecraft 220. The electrical connector 210 provides electrical connectivity between the spacecraft and the electrical ground support equipment during pre-launch processing. The electrical connector 210 may provide any one or more of inflight electrical commanding, monitoring, and telemetry access where such services are available from the launch vehicle.

The launch fitting 208 includes a structural connector 212 that structurally connects with the structural connector 202 of the first spacecraft 220.

The connector system 200 provides an electrical interface between the spacecrafts 220, 240, 260 and the launch vehicle 208. The connector system 200 may enable the monitoring of battery temperature and voltage, trickle charge the battery before launch, detect separation and initiate boot-up, and/or re-configure spacecraft parameters through command and telemetry link.

The connector system 200 may enable launches with the spacecraft powered up prior to separation from the launch vehicle. The connector system 200 may enable to top-up the battery charge to keep it as close as possible to 100% before the launch itself, minimizing the amount of battery discharge before the mission starts.

The connector system 200 may perform launches with spacecraft powered-on. By powering on before separation the system 200 may establish time, attitude, and position knowledge which may help with sun search / detumble. The connector system 200 may also enable control angular rates after separation to reduce collision risk.

The connector system 200 may reduce the battery size (e.g., which may represents 5-10kg of the spacecraft, and a significant cost of the spacecraft). The connector system 200 may have lower overall spacecraft mass and cost by minimizing the battery size. The connector system 200 may monitor battery temperature and voltage and to trickle charge the battery before launch.

The connector system 200 may detect separation and initiate boot-up. This can also be done with mechanical switches, and may have dedicated hardware (limit switches). The connector system 200 may re-configure spacecraft parameters through a command / telemetry link (such as ephemeris data, crypto keys, etc.).

Referring now to Figure 5, illustrated therein is a pogo connector 300, in accordance with an embodiment. The pogo connector has a first side 302 and a second side 312. The first side 302 includes an electrical connector 304 having an array of surface contacts 306. The second side 312 includes an electrical connector 314 having an array of pogo contacts 316.

Referring now to Figure 6, illustrated therein is an example pogo contact 400. The pogo contact 400 includes a base 402 and a pin 404. The pin 404 moves (along direction 401) with respect to the base 402, while maintaining electrical connectivity. The pogo contact 400 includes a spring 406 that biases the pin 404 away from the base 402. When the pin 404 contacts an electrical surface contact (e.g., surface contact 306) the pin 404 compresses the spring 406 while maintaining electrical connectivity.

Referring now to Figure 7, illustrated therein is an example spring connector 450. The spring connector 450 includes a base 452 and a spring contact 454. The spring contact 454 moves (along direction 451) with respect to the base 452, while maintaining electrical connectivity. The spring connector 450 includes a spring inherent in the spring contact 454 that biases the spring contact 454 away from the base 442. When the spring contact 454 contacts a corresponding electrical contact the spring contact 454 is compressed while maintaining electrical connectivity.

Figures 5, 6, and 7 illustrate example electrical connectors as contemplated herein. Other pogo, pogo-type, and spring connections may be used in the connection system 200.

Figure 8 illustrates a conventional electrical connector 500. The conventional electrical connector 500 may be used in umbilical connections. The conventional electrical connector 500 includes a first side 502 and a second side 512. The first side 502 includes a plurality of pins 504. The second side 512 includes a plurality of holes 514 for receiving the plurality of pins 504. The first side 502 includes an alignment flange 506 that mates with an alignment groove 516 of the second side 512 to ensure that the pins 504 are oriented and aligned with their respective holes 514. If there is not perfect alignment between the first side 502 and the second side 512 the connection may not be made or the pins 504 may become damaged. The conventional electrical connector 500 includes retentional forces to keep the first side 502 connected with the second side 512. When the first side 502 and the second side 504 are separated, force is required to overcome the retentional forces which may undesirably impart motion onto elements that it contacts (e.g., spacecraft in space deployment).

Figure 9 illustrates a point to point connector system 600, in accordance with an embodiment. The connector system 600 may be used with the launch vehicle 308 and system of Figure 3 and/or the spacecraft platforms 102 of Figures 1, 2A, and 2B.

The connector system 600 includes a plurality of spacecraft 620, 640, 660. The spacecraft may be the spacecraft platforms of Figure 1. The plurality of spacecraft includes a first spacecraft 620, a second spacecraft 640, and a third spacecraft 660. While three spacecraft 620, 640, 660 are shown in Figure 9, there can be one or more spacecraft in the system 600.

The connector system 600 includes a plurality of structural connectors (not shown) that structurally connect the spacecraft 620, 640, 660. The structural connectors may be the structural connectors 120 of Figure 1.

The connector system 600 includes a plurality of electrical connectors 622, 642, 662 that electrically connect the spacecraft 620, 640, 660. The electrical connectors 622, 642, 662 include a first connector pad 624, 644 that mates with a second connector pad 626, 646, 666. The electrical connectors 622, 642, 662 are absent a connection force inherent in the electrical connector 622, 642. The connection force is a force within conventional connectors that keeps the first connector pad 624, 644 in contact with the second connector pad 626, 646, 666.

The point to point connector system 600 features a repeating pattern in the spacecraft 620, 640, 660.

The spacecraft 620, 640, 660 include a return loop 628, 648 that is able to detect if the first and second connector pads have been disconnected. The return loop 628, 648 passes through the adjacent spacecraft 622, 642, and back up to detect when the spacecraft is electrically connected and stacked.

The spacecraft 620, 640, 660 include a connector 630, 650, 670 that connects with the onboard systems (e.g., power and/or data systems) of the spacecraft 620, 640, 660.

The first connector pad 624 of the first spacecraft 620 electrically connects with the second connector pad 646 of the second spacecraft 640. The first connector pad 644 of the second spacecraft 640 electrically connects with the second connector pad 666 of the third spacecraft 660. The second connector pad 626 of the first spacecraft 620 may connect with a base connector pad 602 of a launch vehicle 604. The launch vehicle 604 also includes a return loop 606.

The electrical connectors 622, 642, 662 may include pogo connectors, where the first and second connector pads are interfaces of the pogo connector. The first connector pads 624, 644 may include an electrical contact surface. The second connector pads 626, 646, 666 may include an electrical contact pin. The electrical contact pin may have a spring. The spring may flexibly contact the electrical contact surface, particularly where there is not perfect structural alignment between the spacecraft 620, 640, 660.

The first connector pads 624, 644 and the second connector pads 626, 646, 666 may not have to be push apart, thereby reducing any unnecessary separation forces that may cause undesirable movement in a space environment.

The first connector pads 624, 644 and the second connector pads 626, 646, 666 may have no alignment features that provide alignment between the spacecraft 620, 640, 660. The structural alignment between the spacecraft 620, 640, 660 is provided by the structural connectors and not the interface between the first connector pads 624, 644 and the second connector pads 626, 646, 666.

During separation of the spacecraft 620, 640, 660, the electrical connectors 622, 642, 662 may advantageously not be damaged because of forces that are otherwise present in conventional connection mechanisms (see, for example, Figure 7).

The electrical connectors 622, 642, 662 may include any one or more electrical connections. In the embodiment of Figure 9, eight connectors are shown.

While the above description provides examples of one or more apparatus, methods, or systems, it will be appreciated that other apparatus, methods, or systems may be within the scope of the claims as interpreted by one of skill in the art.

## Claims

1. A connector system for spacecrafts, the system comprising:
a first spacecraft including:
a structural connector that provides structural support and alignment to a second structural connector; and
an electrical connector that electrically connects the spacecraft platform to a launch vehicle and/or a second spacecraft;
wherein the electrical connector includes a first connector pad that mates with a second connector pad; and
wherein the electrical connector is absent a connection force inherent in the electrical connector, wherein the connection force is a force that keeps the first connector pad in contact with the second connector pad.

2. The system of claim 1, wherein the electrical connector includes a pogo connector, wherein the first and second connector pads are interfaces of the pogo connector.

3. The system of claim 1, wherein the first connector pad includes an electrical contact surface, and wherein the second connector pad includes an electrical contact pin, wherein the electrical contact pin has a spring that flexibly contacts the electrical contact surface.

4. The system of claim 1, wherein the first connector pad and the second connector pad are located adjacent the structural connector.

5. The system of claim 1, wherein the first connector pad and the second connector pad do not have alignment features; and wherein structural alignment is provided by the structural connectors and not the interface between the first connector pad and the second connector pad.

6. The system of claim 1, wherein the electrical connector includes any one or more electrical connections.

7. The system of claim 1, wherein the electrical connector includes a data connector that transmits data.

8. The system of claim 7, wherein the data connector connects to an onboard computer or a ground system computer.

9. The system of claim 7, wherein the data connector is a CAN bus connector; or.
wherein the data connector is a point-to-point connector.

10. The system of claim 1, wherein the electrical connector includes a power connector that transmits power; and/or
wherein the power connector connects to an electrical power system that connects to an electrical battery on the first spacecraft.

11. The system of claim 1, wherein the electrical connector includes a separation connector that detects if the first and second connector pads have been disconnected.

12. The system of claim 11, wherein the separation connector includes a loop back connection that passes through the launch vehicle and/or the second spacecraft, and back up to detect when the first spacecraft is electrically connected.

13. The system of claim 1, wherein the electrical connector enables any one or more of monitoring battery temperature and voltage, trickle charging the battery before launch, detecting separation and initiating boot-up, and re-configuring spacecraft parameters through command and telemetry link.

14. The system of claim 1, wherein the electrical connector enables top-up of a battery charge to minimize an amount of battery discharge before launch.

15. The system of claim 2, wherein the pogo connector has a first side and a second side, wherein the first side includes an electrical connector having an array of surface contacts, and wherein the second side includes an electrical connector having an array of pogo contacts; and/or
wherein the pogo contact includes a base and a pin, wherein the pin moves with respect to the base while maintaining electrical connectivity, wherein the pogo contact includes a spring that biases the pin away from the base, and wherein when the pin contacts an electrical surface contact the pin compresses the spring while maintaining electrical connectivity.
